# EUROPÄISCHE PATENTSCHRIFT

(11) **EP 0 994 520 B1**
(45) Veröffentlichungstag und Bekanntmachung des Hinweises auf die Patenterteilung: **08.06.2005**
(21) Anmeldenummer: 99119305.3
(22) Anmeldetag: 29.09.1999
(51) Int. Cl.: H01M 4/92, B01J 23/42, B01J 23/46, B01J 23/56, B01J 35/02, B01J 23/89

(54) **Pt/Rh/Fe-Legierungskatalysator für Brennstoffzellen und Verfahren zu dessen Herstellung**
Catalyst for fuel cell comprising a Pt/Rh/Fe alloy and its manufacturing method
Catalyseur pour cellule à combustible comprenant un alliage Pt/Rh/Fe et sa méthode de fabrication

(30) Priorität: 17.10.1998 DE 19848032
(43) Veröffentlichungstag der Anmeldung: 19.04.2000
(73) Patentinhaber: Umicore AG & Co. KG, 63457 Hanau-Wolfgang (DE)
(72) Erfinder: Auer, Emmanuel, Dr., 60528 Frankfurt (DE); Gerhard, Heinz, 63594 Hasselroth-Neuenhasslau (DE); Lehmann, Thomas, Dr., 63505 Langenselbold (DE); Schwarz, Robert, 63517 Rodenbach (DE); Starz, Karl-Anton, Dr., 63517 Rodenbach (DE)
(74) Vertreter: Stellbrink, Axel

(56) Entgegenhaltungen:
- EP-A- 0 665 985
- EP-A- 0 827 225
- GB-A- 1 003 499

## Beschreibung

Die Erfindung betrifft einen Platin-Legierungskatalysator aus einer ternären Platin/Rhodium/Eisen-Legierung auf einem elektrisch leitfähigen Kohlenstoffträger. Die ternäre Legierung liegt in Form von feinteiligen Legierungspartikeln auf dem Trägermaterial vor.

Platin- und insbesondere legierte Platinkatalysatoren auf elektrisch leitfähigen Kohlenstoffträgern werden als Elektrokatalysatoren für Anoden und/oder Kathoden in Brennstoffzellen, bevorzugt in phosphorsauren Brennstoffzellen (Phosphoric Acid Fuel Cell, PAFC) und Polymer-Elektrolyt-Membranzellen (Polymer Electrolyte Membrane Fuel Cell, PEMFC), eingesetzt. Auf der Kathodenseite werden Sauerstoff bzw. Luft als Oxidationsmittel verwendet. Als Brennstoffe dienen auf der Anodenseite Wasserstoff, Kohlenwasserstoffe, wie zum Beispiel Methan, höhere Alkane oder sauerstoffhaltige Kohlenwasserstoffe, wie zum Beispiel Alkohole, oder deren Reformate. Die übliche Platinbeladung liegt im Bereich von 5 bis 80, vorzugsweise im Bereich von 10 bis 50 Gew.-% bezogen auf das Gesamtgewicht des Katalysators. In Abhängigkeit von der Elektrodenseite werden als elektrisch leitfähige Kohlenstoffträger Ruße, graphitierte Ruße, Graphit, Carbide und deren physikalischen Mischungen verwendet.

Es ist bekannt, daß die erzielte elektrische Leistung einer Phosphorsäure-Brennstoffzelle im wesentlichen von der Aktivität des Kathodenkatalysators abhängt. Deshalb werden Kathodenkatalysatoren gewünscht, die eine höhere Stromdichte bei vorgegebener Spannung sowie einen geringeren Spannungsabfall während der Lebensdauer des Katalysators aufweisen. Dies führt zu geringeren Kosten pro erzeugter Stromeinheit.

Als geeignete Katalysatorsysteme mit guten Leistungsdaten haben sich eine Vielzahl unterschiedlicher Platin-Legierungskatalysatoren erwiesen, die hauptsächlich Cobalt und Chrom als weitere Bestandteile enthalten.

In der Patentliteratur werden verschiedene Verfahren zur Herstellung solcher Legierungskatalysatoren beschrieben. Die einzelnen Verfahren unterscheiden sich im wesentlichen durch die verwendeten Vorstufen für die Legierungskomponenten und durch die Art und Weise der Abscheidung der Legierungskomponenten auf dem leitfähigen Kohlenstoffträger. Der Art und Weise der Abscheidung kommt entscheidende Bedeutung zu, da durch diesen Verfahrensschritt die Feinteiligkeit der späteren Legierungspartikel auf dem Träger und damit die für den elektrochemischen Prozeß zur Verfügung stehende katalytisch aktive Metalloberfläche mitbestimmt wird.

Nach Abscheidung auf dem Träger können die Legierungskomponenten naßchemisch oder durch eine Gasphasenreduktion reduziert werden.

Alle bekannten Verfahren beenden die Herstellung des Katalysators mit einer Temperaturbehandlung zwischen 800 und 1000°C in einer inerten oder reduzierenden Atmosphäre. Durch diese Temperaturbehandlung wird die Reduktion der Legierungskomponenten abgeschlossen.

Die Legierungskatalysatoren zeichnen sich im Vergleich zu reinem Platin insbesondere durch eine verbesserte Alterungsstabilität unter den stark korrosiven Bedingungen beim Betrieb einer phosphorsauren Brennstoffzelle aus (Betriebstemperatur 170°C bis 220°C, 100%-ige Phosphorsäure als Elektrolyt).

Die EP 0 665 985 B1 offenbart die Herstellung eines ternären Pt/Rh/Fe-Katalysators, der sich durch eine verbesserte Langzeitstabilität gegenüber den in der US 4,447,506 und in der US 4,677,092 offenbarten Pt/Co/Cr-Katalysatoren auszeichnen soll.

Die Herstellung des Pt/Rh/Fe-Katalysators erfolgt in einem mehrstufigen Prozeß, wobei in der ersten Stufe zunächst ein geträgerter, bimetallischer Platin/Rhodium-Katalysator auf graphitiertem Ruß hergestellt wird, der in einem weiteren Schritt mit Eisen imprägniert wird. Durch Calcinieren des Katalysators bei Temperaturen zwischen 800 und 1000°C sowie einem Nachtempern bei ca. 600°C wird ein geordneter, Pt/Rh/Fe-Legierungskatalysator mit kubisch flächenzentrierter Kristallstruktur erhalten.

Das beschriebene Verfahren zur Herstellung des Platin-Legierungskatalysators weist verschiedene Nachteile auf.

Die Abscheidung der Legierungskomponenten auf dem Träger in EP 665 985 B1 wird in mehreren Stufen durchgeführt. Dieser Prozeß ist zeitaufwendig und macht außerdem teilweise große Reaktionsvolumina erforderlich. Der Katalysator weist in den einzelnen Fertigungsstufen relativ hohe Chlorgehalte auf, die sich negativ auf die Aktivität und vor allem auf die Langzeitstabilität des fertigen Katalysators auswirken können. Deshalb wird das Chlor durch nachgeschaltete Waschprozesse, die teilweise mit nachfolgenden Hydrolyseschritten gekoppelt sind, entfernt. Über die erzielbaren Durchmesser der Legierungspartikel wird nichts berichtet.

Zur Herstellung eines ternären Pt/Co/Cr-Katalysators geht die US 4,447,506 von einem kommerziellen Platinkatalysator auf graphitiertem Ruß aus, auf dem sequentiell Cobalt und Chrom durch Imprägnieren abgeschieden werden. Zu diesem Zweck wird der Platinkatalysator in Wasser mit Hilfe von Ultraschall für die Dauer von 15 Minuten dispergiert. Der pH-Wert der Suspension wird mit verdünnter Ammoniaklösung auf 8 eingestellt. Danach wird der Suspension eine Ammoniumchromatlösung zugefügt und zur Abscheidung des Chroms auf dem Platin der pH-Wert durch Zugabe von verdünnter Salzsäure auf 5,5 eingestellt. Nach Abscheidung des Chroms auf dem Platin wird der Suspension eine Lösung von Cobaltnitrat zugefügt. Während der Zugabe der Lösungen wird die Suspension gründlich gerührt. Nach Abfiltrieren des Katalysators und Trocknen wird er bei 900°C für die Dauer von einer Stunde unter strömendem Stickstoff calciniert. Katalysatoren, die nach dieser Vorschrift hergestellt werden weisen eine ungeordnete Kristallstruktur auf.

Gemäß der US 4,677,092 wird ein geordneter, ternärer Legierungskatalysator erhalten, wenn zusätzlich zu den Verfahrensschritten gemäß der US 4,447,506 der Platinkatalysator oder der Platin-Legierungskatalysator nach dem Calcinieren in einer inerten Atmosphäre mit einer Rate abgekühlt wird, die die Ausbildung einer geordneten Kristallstruktur erlaubt.

Die US 5,013,618 beschreibt die Herstellung eines ternären Katalysators, der neben Platin und Iridium ein drittes Metall enthält. Zur Herstellung wird Ruß als Trägermaterial unter Zufügung von Natriumbicarbonat in Wasser suspendiert. Die Suspension wird unter ständigem Rühren für die Dauer von 30 Minuten gekocht. Anschließend wird eine separat hergestellte Lösung von Iridiumchlorid und Hexachloroplatinsäure der Suspension tropfenweise zugegeben. Die resultierende Suspension wird weitere 15 Minuten gekocht, bevor der Suspension Formaldehyd zum Reduzieren und Ausfällen von Platin und Iridium zugefügt wird. Der abfiltrierte Katalysator wird mit einer Lösung von Ammoniumbicarbonat gewaschen und bei etwa 90°C getrocknet. Der so erhaltene, binäre Katalysator wird erneut in einer wäßrigen Lösung suspendiert und eine wasserlösliche Verbindung des gewünschten dritten Metalls hinzugefügt. Der pH-Wert der Lösung wird mit Ammoniak auf 5,5 eingestellt. Die Lösung wird bis zur Trockne eingedampft und die zurückbleibenden Feststoffe werden unter Stickstoff 1 Stunde lang bei 930°C calciniert, um die abgeschiedenen Metalle in die gewünschte Legierung zu überführen. Danach wird die Temperatur auf 600°C abgesenkt und für eine weitere Stunde auf diesem Wert gehalten, bevor der Katalysator auf Raumtemperatur abgekühlt wird.

Die GB-OS 2,242,203 und die EP 0450849 A2 beschreiben die sequentielle Herstellung von Platin-Legierungskatalysatoren in einem Eintopf-Verfahren. Unter einem Eintopfverfahren wird im Rahmen dieser Erfindung eine Vorgehensweise verstanden, bei der die Zwischenstufen des Katalysators nicht von der flüssigen Phase der Suspension abgetrennt, getrocknet und gegebenenfalls calciniert werden, bevor die Zwischenstufe zur Fertigstellung des Katalysators erneut suspendiert wird. Das Verfahren geht von Hexachloroplatinsäure aus, die zu einer basischen Suspension eines leitfähigen Kohlenstoffträgers gegeben wird. Um die Trägersuspension basisch zu machen, wird Natriumbicarbonat verwendet, welches auch als Puffer zur Stabilisierung des pH-Wertes der Suspension dient. Die Legierungskomponenten Cobalt und Chrom werden als Chloride oder Nitrate der Suspension des nicht reduzierten Pt/C-Katalysators hinzugefügt. Die Legierungsbildung wird wie üblich durch thermische Behandlung unter Inertgasatmosphäre vollzogen. Eine vorgeschaltete naßchemische Reduktion mit Hydrazin, Formaldehyd oder Ameisensäure oder eine Gasphasenreduktion mit Wasserstoff ist optional.

Die DE 44 26 973 C1 beschreibt ein weiteres Verfahren zur Herstellung eines Pt/Co/Cr-Katalysators. Das Verfahren beinhaltet das Anfertigen einer wäßrigen Suspension des Kohlenstoffträgers, Mischen dieser Suspension mit einer wäßrigen Lösung von Vorstufen der Legierungskomponenten, Ausfällen der Legierungskomponenten in Form ihrer Hydroxide durch Zugabe einer Base, Reduzieren mit einem Reduktionsmittel, Waschen und Trocknen der so erhaltenen Katalysatorvorstufe und Calcinieren bei Temperaturen oberhalb von 800°C zur Legierungsbildung. Wesentlicher Punkt des Verfahrens ist, daß es sich bei den Vorstufen der Legierungskomponenten um Nitrate handelt, die gemeinsam auf den Kohlenstoffträger ausgefällt werden. Die Suspension des Kohlenstoffträgers wird vor Zugabe der Legierungskomponenten auf 80 bis 90°C erwärmt und nach Zugabe der Legierungskomponenten auf einer konstanten Temperatur zwischen 70 und 80°C gehalten. Zur vollständigen und gleichzeitigen Abscheidung der Legierungskomponenten wird der pH-Wert der Suspension durch Zugabe von Natronlauge als Base auf 8 bis 9 angehoben. Wesentlich für dieses Verfahren ist die Verwendung der Legierungskomponenten in Form von Nitraten, insbesondere auch die Verwendung von Platin(IV)nitrat anstelle der sonst üblichen Hexachloroplatinsäure. Platin(IV)nitrat zeichnet sich gegenüber Hexachloroplatinsäure dadurch aus, daß es sich sehr leicht hydrolysieren läßt. Durch diese Eigenschaft des Platin(IV)nitrats ist die gemeinsame Ausfällung aller drei Legierungskomponenten auf dem Kohlenstoffträger möglich.

Aufgabe der vorliegenden Erfindung ist es, einen verbesserten Pt/Rh/Fe-Legierungskatalysator zur Verfügung zu stellen, der aktiver und stabiler als herkömmliche Katalysatoren ist und sich durch kleinere Legierungskristallite, das heißt durch eine höhere Dispersion der aktiven Komponenten auszeichnet. Gegenstand der Erfindung ist weiterhin ein Verfahren zur Herstellung dieses Katalysators, welches sich durch einen geringeren Zeitbedarf und damit durch verringerte Herstellkosten gegenüber den bekannten Verfahren auszeichnet.

Die Aufgabe wird durch einen Platin-Legierungskatalysator auf einem elektrisch leitfähigen Kohlenstoffträger gelöst, welcher eine Legierung aus 40 bis 60 Atom-% Platin, 10 bis 20 Atom-% Rhodium und 20 bis 50 Atom-% Eisen in Form von feinteiligen Legierungspartikeln enthält. Der Katalysator ist dadurch gekennzeichnet, daß die mittlere Kristallitgröße der Legierungspartikel zwischen 6,0 und 8,5 nm beträgt.

Bevorzugt liegt Platin in einer Menge von 5 bis 50, insbesondere 10 bis 20 Gew.-%, bezogen auf das Gesamtgewicht des Katalysators, vor.

Der erfindungsgemäße Katalysator wird in einem Eintopfverfahren durch simultane oder sequentielle Fällung der entsprechenden Hydroxide aus den Chloridsalzen des Platins und Rhodiums sowie von Eisennitrat auf den in Wasser suspendierten Kohlenstoffträger erhalten. Im Anschluß an die Fällung folgen eine naßchemische Reduktion, intensives Waschen, Trocknen im Vakuum und abschließende Calcination bei Temperaturen über 700°C.

Die Fällung wird mit einer starken Base wie zum Beispiel Natronlauge vorgenommen. Es wurde festgestellt, daß durch die Verwendung einer starken Base eine praktisch quantitative Hydrolyse der eingesetzten Chlorverbindungen erfolgt und zusätzliche Reinigungsschritte zur Entfernung des Chlors, wie in der EP 0 665 985 B1 beschrieben, nicht notwendig sind.

Als Träger für den Legierungskatalysator eignen sich Graphit, leitfähiger, insbesondere graphitierter Ruß und/oder deren physikalische Mischungen. Die spezifische Oberfläche des Trägers liegt dabei im Bereich von 50 m²/g bis 1000 m²/g. Typische Trägermaterialien sind Vulcan XC-72® der Firma Cabot Corporation, Cambridge, Massachusetts, oder Shawinigan Black®, einem Acetylenruß der Firma Chevron, San Francisco, Kalifornien, oder deren graphitierte Varianten.

Für die Herstellung des Legierungskatalysators werden Chloride von Platin und Rhodium als Vorläuferverbindungen verwendet.

Zur Temperaturbehandlung wird der Katalysator unter Inertgasatmosphäre, gewöhnlich Stickstoff, auf Temperaturen oberhalb 700°C, bevorzugt auf 900°C, erwärmt und erst nach Ablauf einer Haltezeit abgekühlt. Die Haltezeit sollte wenigstens 30 Minuten betragen, um eine vollständige Reduktion der Legierungskomponenten und Ausbildung der Legierung zu ermöglichen, und die Dauer von 2 Stunden nicht überschreiten, da mit zunehmender Dauer die Temperaturbehandlung die zunächst feinteiligen Legierungspartikel zu gröberen Partikeln versintern.

Der erfindungsgemäße Katalysator besitzt eine sehr homogene Elementverteilung. Die zunächst ungeordnete Struktur der Legierungspartikel kann durch die abschließende Temperaturbehandlung beziehungsweise Calcination leicht in eine geordnete Raumstruktur überführt werden. Hierzu wird der Katalysator zunächst auf eine Temperatur im Intervall zwischen 700 und 500°C abgekühlt und dann für weiter 0,5 bis 2 Stunden bei dieser Temperatur calciniert. Die Legierungspartikel weisen in Abhängigkeit von der Platinbeladung des Trägers typische Partikeldurchmesser von 6,0 bis 8,5 nm auf.

Die Partikelgrößen des gemäß der EP 0 665 985 B1 hergestellten Pt/Rh/Fe-Katalysators liegen dagegen deutlich über 10 nm. Die elektrochemisch zugängliche, aktive Metalloberfläche ist daher geringer als beim erfindungsgemäßen Katalysator und führt zu einer verminderten elektrochemischen Leistung (Zellspannung). Die Ursachen für die gröberen Legierungspartikel gemäß der EP 0 665 985 B1 sind nicht völlig geklärt. Es besteht jedoch die Vermutung, daß ein wesentlicher Grund in den mehrfach durchgeführten Waschprozessen zur Reduzierung des Chlorgehaltes und in der Isolierung der Pt/Rh-Zwischenstufe zu sehen ist, die eine erneute Suspendierung notwendig macht, um die Abscheidung des Eisens vornehmen zu können.

Die Herstellung des erfindungsgemäßen Katalysators wird im einzelnen wie folgt durchgeführt:

Graphitierter Ruß, zum Beispiel Vulcan XC-72 (Vulcite®), wird mit Hilfe eines Ultra-Turax-Gerätes sorgfältig in Wasser suspendiert. Die Temperatur der Lösung steigt dabei an und wird durch zusätzliches Erwärmen auf 80°C eingestellt. Der pH-Wert der fertigen Suspension liegt typisch zwischen 7 und 9. Dieser heißen Suspension wird eine verdünnte, saure Lösung von Hexachloroplatinsäure, Rhodiumchlorid und Eisen(III)nitrat hinzugefügt. Dabei stellt man durch Menge und Konzentration der Imprägnierlösung die Beladung des Trägers mit katalytisch aktiven Metallen sowie deren molare Verhältnisse zueinander ein.

Zur Hydrolyse und Abscheidung der Legierungskomponenten als Hydroxide wird eine starke Base, wie zum Beispiel Natronlauge, langsam hinzugefügt und der pH-Wert auf einen Wert zwischen 8 und 10 angehoben. Durch parallel dazu durchgeführtes Erhitzen der Lösung bis zum Sieden wird die Hydrolyse der eingesetzten Salzlösung abgeschlossen und eine aufwendige Nachwäsche des Katalysators durch praktisch quantitative Überführung der Chloridliganden in eine lösliche Form überflüssig gemacht. Die Rate der Zugabe der Base zur Suspension sollte so bemessen werden, daß innerhalb von 30 bis 120 Minuten eine Menge an Base zugegeben wird, die etwa dem 1,5 bis 2,5-fachen der stöchiometrisch für die vollständige Hydrolyse der Salzlösung benötigten Menge entspricht.

Der Hydrolyse schließt sich eine naßchemische Reduktion der Edelmetallverbindungen durch Zugabe eines Reduktionsmittels wie Hydrazin, Natriumborhydrid, Natriumformiat, Natriumhydrophoshat oder Formaldehyd an.

Nach Filtration und Wäsche des Katalysators mit Wasser sowie Trocknung des Katalysators im Vakuum bei 100°C auf eine Restfeuchte unter 2 Gew.-% wird der trimetallische Katalysator unter Inertgasatmosphäre bei 900°C aufgeheizt und nach einer Haltezeit von einer Stunde innerhalb von 30 min auf 600°C abgekühlt und für die Dauer von einer Stunde auf dieser Temperatur gehalten. Bei dieser Temperaturbehandlung wird die Ausbildung geordneter Legierungskristallite des Platin, Rhodiums und Eisens vervollständigt. Nach Abkühlung auf Raumtemperatur, ebenfalls unter Inertgas, ist der Katalysator einsatzfähig.

Alternativ zur oben beschriebenen naßchemischen Reduktion nach Abfiltrieren und Trocknung des Katalysators kann vor der Calcination eine Gasphasenreduktion bei niedriger Temperatur angewendet werden.

In den folgenden Beispielen und Vergleichsbeispielen wurden erfindungsgemäße Katalysatoren und Vergleichskatalysatoren jeweils in Ansätzen von 50 g hergestellt und bezüglich ihrer elektrochemischen Eigenschaften miteinander verglichen. Für alle Katalysatoren wurde als Träger ein graphitierter Ruß verwendet. Die spezifische Oberfläche wurde durch Stickstoffadsorption nach der Methode von Brunauer, Emmett und Teller (BET-Oberfläche) gemäß der Vorschrift in der Norm DIN 66 132 bestimmt. In den Vergleichsbeispielen 1 bis 2 wurden Pt/Rh/Fe-Vergleichskatalysatoren gemäß dem einzigen Beispiel der Patentschrift EP 0 665 985 B1 hergestellt.

Von den hergestellten Katalysatoren wurde in allen Fällen die Größe der Legierungspartikel und die Gitterkonstante der gebildeten Legierung mittels Röntgenbeugung (XRD) bestimmt und mit den Daten aus dem Patent EP 0 665 985 B1 verglichen.

Bei der Überprüfung des Beispiels der EP 0 665 985 B1 wurde festgestellt, daß es mit den in der Patentschrift gemachten Angaben nicht ohne weiteres nacharbeitbar ist. Es mußten die im folgenden beschriebenen Änderungen und Anpassungen vorgenommen werden, um ein ausführbares Herstellverfahren zu erhalten, welches dennoch so eng wie möglich den Vorgaben der EP 0 665 985 B1 folgt:

Gemäß dem Beispiel soll ein Pt/Rh/Fe-Katalysator mit einem Atomverhältnis 50:15:35 hergestellt werden, der 10 Gew.-% Pt und 0,33 Gew.-% Rh enthält. Die Angabe für Rhodium ist allerdings fehlerhaft, denn ein Katalysator mit dem geforderten Atomverhältnis muß bei 10 Gew.-% Pt 1,59 Gew.-% Rh enthalten.

Die weitere Überprüfung der Zahlenwerte zeigt, daß bei der Herstellung angeblich von wasserfreiem Rhodiumchlorid RhCl₃ ausgegangen wurde. Die angegebenen 0,2265 g RhCl₃ enthalten 0,111 g Rh, das heißt 1,078-10⁻³ mol Rh. Entsprechend dem geforderten Atomverhältnis der drei Metalle zueinander enthält der Katalysator also 3,59·10⁻³ mol Pt (0,7 g Pt) und 2,52·10⁻³ mol Fe (0,14 g Fe). Diese Mengen werden auf 6 g Träger aufgebracht. Die Masse des gesamten Katalysators beträgt also 6,951 g, so daß er 1,6 Gew.-% Rh, 10,1 Gew.-% Pt und 2,01 Gew.-% Fe enthält, was gut mit der gewünschten zehnprozentigen Beladung mit Platin übereinstimmt.

Wasserfreies Rhodiumchlorid ist zwar technisch verfügbar, ist jedoch gemäß Hollemann-Wiberg, Lehrbuch der Anorganischen Chemie, Walter de Guyter, Berlin, New York 1985, nicht wasserlöslich, so daß bei der Nacharbeitung des Beispiels von RhChl₃·xH₂O mit einem Edelmetallgehalt von 38% ausgegangen werden mußte. Als Ausgangsmaterial wurde gemäß dem Beispiel feste Hexachloroplatinsäure verwendet. Diese ist technisch allerdings nur als 6-Hydrat mit einem Edelmetallgehalt von 40% erhältlich, so daß auch hier entsprechende Mengenanpassungen vorgenommen werden mußten.

Punkt A5 des Beispiels beschreibt die Zugabe der verdünnten Platin-Rhodium-Lösung zur Trägersuspension. Anschließend wird 30 min bei Siedetemperatur nachgerührt. In diesem Abschnitt findet sich keine Angabe über den pH-Wert der Suspension vor der unter Punkt A6 beschriebenen Reduktion mit Formaldehyd. In mehreren Nachstellungen des Beispiels wurde nun beobachtet, daß der pH-Wert der Suspension nach Edelmetallzugabe auf einen Wert zwischen 5 und 6,5 fällt. Führt man dann gemäß dem Beispiel eine Reduktion mit Formaldehyd durch, so kann es aufgrund des weiteren Absinkens des pH-Wertes durch Bildung von Formiat aus Formaldehyd zu einer Ablösung der Edelmetalle vom Träger kommen. Aus diesem Grund empfiehlt sich entweder eine stärkere Vorneutralisation des Trägers mit einer entsprechend größeren Menge an Natriumbicarbonat oder die Nachstellung des pH-Wertes vor dem Reduktionsschritt mit einer zusätzlichen Menge an Natriumbicarbonat (Vergleichsbeispiel 2).

Unter Punkt A9 des Beispiels wird ein viermaliges Waschen des Katalysators mit einer nicht näher spezifizierten Ammoniumbicarbonatlösung zur Entfernung des Chlorids beschrieben. Bei technischen Prozessen zur Herstellung von Katalysatoren wird üblicherweise von einer 10 Gew.-% Ammoniumbicarbonatlösung ((NH₄)HCO₃-Lösung) ausgegangen. Dies wurde auch für sämtliche Nachstellungen des Beispiels aus der EP 0 665 985 B1 angenommen.

Die so ausgeführten Vergleichsbeispiele zeigten in jedem Fall unabhängig von der Platinbeladung nach thermischer Behandlung bei 900°C Partikelgrößen der Pt/Rh/Fe-Legierungskristallite von deutlich mehr als 10 nm.

### Vergleichsbeispiel 1:

Es wurde ein Pt/Rh/Fe-Katalysator entsprechend dem Beispiel der EP 0 665 985 B1 hergestellt.
1. 36,36 g Vulcite® (Feuchte 1,56 Gew.-%) wurden in 2400 ml deionisiertem Wasser 18 Stunden gerührt.
2. Die Suspension wurde mit 12,55 g Natriumhydrogencarbonat versetzt und mit einem Labsonic 1510-Gerät 15 Minuten behandelt. Danach wurde für 60 min zum Sieden erhitzt. Der pH-Wert der Suspension lag bei ca. 9.
3. 10,53 g feste Hexachloroplatin(IV)säure (40 Gew.-% Pt) wurden in 60 ml Wasser gelöst.
4. 1,76 g RhCl₃·3H₂O (38 Gew.% Rh) wurden in 9,5 ml Wasser gelöst und mit der Platinlösung vereinigt.
5 Diese Pt/Rh-Salzlösung wurde innerhalb von 15 min zur Suspension zugetropft. Anschließend wurde 60 min bei Siedetemperatur nachgerührt. Der pH-Wert lag dann bei ca. 6.
6. Eine verdünnte Formaldehydlösung (3,06 ml HCOH-Lösung, 37 Gew.-%, verdünnt mit vollentsalztem Wasser auf 100 ml Gesamtvolumen) wurde zur siedenden Suspension zugetropft und 60 min nachgerührt.
7. Der Pt/Rh-Vorkatalysator wurde dann heiß abfiltriert.
8. Nach Filtration wurde der Filterkuchen viermal mit jeweils 2200 ml destilliertem Wasser aufgenommen, mit 700 ml 10 Gew.-% (NH₄)HCO₃-Lösung versetzt und nach 60 min Rührens erneut abfiltriert.
9. Anschließend wurde bei 82 °C im Vakuum getrocknet.
   Aus der so gewonnenen Katalysatorvorstufe wurde der ternäre Legierungskatalysator wie folgt hergestellt:
10. 20,03 g Pt/Rh-Katalysator (Feuchte 0,19 Gew.-%) wurden erneut in 300 ml destilliertem Wasser suspendiert und mit einem Labsonic 1510 Gerät 10 min behandelt.
11. 2,89 g Eisen(III)nitrat 9 Hydrat wurden in 150 ml destilliertem Wasser gelöst und zur Katalysatorsuspension hinzugefügt.
12. Anschließend wurde die Suspension mit verdünnter NH₃-Lösung auf pH 5,5 gestellt.
13. Die Suspension wurde erneut 10 min mit Ultraschall behandelt und 10 min nachgerührt, wobei die Suspension mit verdünntem Ammoniak auf pH 5,5 gehalten wurde.
14. Nach Filtration wurde der Katalysator 18 Stunden bei 80°C getrocknet.
15. Zur Legierungsbildung wurde der Katalysator bei 927°C eine Stunde sowie anschließend bei 593°C erneut eine Stunde unter Stickstoff calciniert.

Die XRD-Analyse ergab eine Größe der Pt/Rh/Fe-Legierungskristallite von 11,0 nm. Die Gitterkonstante betrug 0,3836 nm. Die spezifische Platinoberfläche wurde mit TEM (Transmissions-Elektronenmikroskopie) unter der Annahme des Vorliegens sphärischer Halbkugeln bestimmt und ergab einen Wert von 27 m²/g. Der Katalysator hatte die molare Zusammensetzung Pt₅₀Rh₁₅Fe₃₅ mit einem Platingehalt von 10 Gew.-%.

### Vergleichsbeispiel 2:

Es wurde ein weiterer Pt/Rh/Fe-Katalysator nach Vergleichsbeispiel 1 hergestellt. Dabei wurde vor der Reduktion mit Formaldehyd (Schritt 6) der pH-Wert auf 7,5 nachgestellt, um das Risiko des Edelmetallverlustes zu minimieren.

Die XRD-Analyse ergab eine Größe der Pt/Rh/Fe-Legierungskristallite von 12,5 nm. Die Gitterkonstante betrug 0,3842 nm. Der Katalysator hatte die molare Zusammensetzung Pt₅₀Rh₁₅Fe₃₅ mit einem Platingehalt von 10 Gew.-%.

In weiteren Versuchen wurde statt der festen Verbindungen RhCl₃·xH₂O und H₂[PtCl₆]·6H₂O technisch verfügbare Lösungen der beiden Verbindungen verwendet. Auch diese Versuche führten nicht zu kleineren Legierungspartikeln.

### Beispiel 1:

Zur Herstellung eines erfindungsgemäßen Katalysators wurden 43,63 g Vulcite® (Feuchte 0,97 Gew.-%) in 1500 ml deionisiertem Wasser suspendiert und 30 min mit einem Ultra-Turax gerührt. Der pH-Wert dieser Suspension lag bei etwa 8.

20 g einer Lösung von Hexachloroplatin(IV)säure (25 Gew.-%) und 3,95 g einer Lösung von Rhodium(III)chlorid (20 Gew.-%) wurden mit deionisiertem Wasser auf ein Gesamtvolumen von 150 ml verdünnt. Die Edelmetalllösung wies einen pH-Wert von etwa 1 auf. Anschließend wurde die Lösung innerhalb von 10 min zur siedenden Trägersuspension zugetropft und 15 min nachgerührt. Der pH-Wert wurde mit 2,5 M Natronlauge innerhalb von 60 min mit einer Rate von 2,5 ml/min auf 9 angehoben.

7,23 g Eisen(III)nitrat 9 Hydrat wurden in 100 ml Wasser gelöst. Diese Lösung wurde zur Suspension getropft. Nach Zugabe dieser Lösung zur Suspension lag der pH-Wert der Suspension wieder im sauren Bereich. Nach 15 min Rühren wurde der pH-Wert mit 2,5 M Natronlauge erneut angehoben, um das Eisen quantitativ auszufällen, was bei Erreichen eines pH-Wertes von etwa 7,5 der Fall war.

Die ausgefällten Verbindungen wurden mit 6,8 ml Formaldehydlösung (37 Gew.-%), die mit 22 ml 2,5 M Natronlauge verdünnt wurden, reduziert. Die Suspension wurde filtriert und das Filtrat mit 1000 ml Wasser gewaschen und bei 80°C im Vakuum getrocknet. Der so erhaltene Pt/Rh/Fe-Katalysator wurde bei 900°C für eine Stunde unter Stickstoff calciniert und anschließend auf 600°C abgekühlt und für die Dauer einer Stunde auf dieser Temperatur gehalten.

Die XRD-Analyse ergab eine Größe der Pt/Rh/Fe-Legierungskristallite von 7,3 nm. Die Gitterkonstante betrug 0,3846 nm. Die spezifische Platinoberfläche wurde mit TEM (Transmissions-Elektronenmikroskopie) unter der Annahme des Vorliegens sphärischer Halbkugeln bestimmt und ergab einen Wert von 37 m²/g. Der Katalysator hatte die molare Zusammensetzung Pt₅₀Rh₁₅Fe₃₅ mit einem Platingehalt von 10 Gew.-%.

### Beispiel 2:

43,63 g Vulcite® (Feuchte 0,97 Gew.-%) wurden in 1500 ml deionisiertem Wasser suspendiert und 30 min mit Ultra-Turax gerührt.

20 g einer Lösung von Hexachloroplatin(IV)säure (25 Gew.-%) und 3,95 g einer Lösung von Rhodium(III)chlorid (20 Gew.-%) wurden mit deionisiertem Wasser auf ein Gesamtvolumen von 150 ml verdünnt. Anschließend wurde diese Lösung innerhalb von 15 min zur siedenden Trägersuspension getropft. Der pH-Wert der Suspension wurde innerhalb von 60 min mit 2,5 M Natronlauge auf pH=9 angehoben. Danach wurden die ausgefällten Verbindungen mit 6,8 ml Formaldehyd (37 Gew.-%) reduziert.

Erst nach diesem Reduktionsschritt wurden der Suspension 7,23 g Eisen(III)nitrat-9 Hydrat, gelöst in 100 ml deionisiertem Wasser, tropfenweise hinzugefügt. Mit 2,5 M Natronlauge wurde dann der pH-Wert innerhalb von 30 min erneut angehoben, 15 nachgerührt und abfiltriert. Nach Trocknen im Vakuum bei 80°C wurde der Pt/Rh/Fe-Katalysator eine Stunde bei 900°C und anschließend eine Stunde bei 600°C unter Stickstoff calciniert.

Die XRD-Analyse ergab eine Größe der Pt/Rh/Fe-Legierungskristallite von 6,5 nm, die Gitterkonstante betrug 0,3857 nm. Der Katalysator hatte die molare Zusammensetzung Pt₅₀Rh₁₅Fe₃₅ mit einem Pt-Gehalt von 10 Gew.-%.

### Beispiel 3:

37,10 g Vulcite® (Feuchte 0,97 Gew.-%) wurden in 2000 ml vollentsalztem Wasser suspendiert und 15 min mit einem Ultra-Turax gerührt.

40 g einer Lösung von Hexachloroplatin(IV)säure (25 Gew.-%), 7,9 g einer Lösung von Rhodium(III)chlorid (20 Gew.-%) und 14,47 g Eisen(III)nitrat 9 Hydrat wurden in 200 ml deionisiertem Wasser vollständig gelöst und tropfenweise zur siedenden Suspension hinzugefügt. Es wurde 30 min nachgerührt und der pH-Wert mit 2,5 M Natronlauge innerhalb von 60 min auf 9 angehoben.

13,6 ml Formaldehydlösung (37 Gew.-%) wurden mit 60 ml 2,5 M Natronlauge versetzt und tropfenweise zur Suspension hinzugegeben. Es wurde 15 min nachgerührt, filtriert, mit 1500 ml deionisiertem Wasser gewaschen und der Katalysator dann bei 80°C im Vakuum getrocknet.

Anschließend wurde der Katalysator bei 900°C eine Stunde unter Stickstoff calciniert, auf 600°C abgekühlt und die Temperatur für eine weitere Stunde auf diesem Wert gehalten.

Die XRD-Analyse ergab eine Größe der Pt/Rh/Fe-Legierungskristallite von 7,8 nm. Die Gitterkonstante betrug 0,3846 nm. Der Katalysator hatte die molare Zusammensetzung Pt₅₀Rh₁₅Fe₃₅ mit einem Platingehalt von 20 Gew.-%.

### Elektrochemische Messungen - Prüfbedingungen

Die Charakterisierung der Katalysatoren erfolgte unter den in Tabelle 1 angegebenen Bedingungen in einer elektrochemischen Vollzelle.

**Tabelle 1**

| Prüfbedingungen | |
|---|---|
| Betriebstemperatur der Zelle | 200°C |
| Fläche der Elektrode | 25 cm² |
| Stromdichte | 300 mA/cm² |
| Wasserstoffumsatz | 80 % |
| Luftumsatz | 60 % |
| Beladung der Kathode | ca. 0,5 mg Pt/cm² |

Als Anode wurde eine mit 0,4 mg Pt/cm² beladene Elektrode von E-TEK mit aufgebrachter SiC-Matrix verwendet. Eingesetzt wurde außerdem H₃PO₄ (99 Gew.-% p.A.), wobei sich die Phosphorsäure in der Testzelle auf ca. 103 Gew.-% aufkonzentrierte. Hinsichtlich der Auswertung der Meßergebnisse wurden zum Vergleich verschiedener Katalysatoren die iRkorrigierten Zellspannungen bei 300 mA/cm² herangezogen. Die maximale Zellspannung stellte sich nach Anfahren der Zelle erfahrungsgemäß nach ca. 100 h Betriebsstunden ein.

### Elektrochemische Messungen - Testergebnisse

Der Vergleich der elektrochemischen Daten der getesteten Legierungskatalysatoren zeigt, daß die erfindungsgemäß hergestellten Pt/Rh/Fe-Legierungskatalysatoren die besten elektrochemischen Leistungsdaten im Test aufweisen. Die nach EP 0 665 985 B1 hergestellten Pt/Rh/Fe-Legierungskatalysatoren erreichen das Zellspannnungsniveau der erfindungsgemäß hergestellten Systeme nicht, was auf die relativ großen Legierungskristallite und die damit verbundenen niedrigere Metalldispersion zurückgeführt werden kann. In der nachfolgenden Tabelle 2 sind die Ergebnisse zusammengefaßt.

**Tabelle 2**

| Ergebnisse der elektrochemischen Untersuchungen | | |
|---|---|---|
| Katalysator | Platinbeladung [mg Pt/cm²] | Zellspannung bei 300 mA/cm² [mV] |
| Vergleichsbeispiel 1 | 0,49 | 616 |
| Vergleichsbeispiel 2 | 0,50 | 585 |
| Beispiel 1 | 0,48 | 651 |
| Beispiel 2 | 0,47 | 639 |
| Beispiel 3 | 0,48 | 657 |

Ein großer Vorteil des Verfahrens zur Herstellung des erfindungsgemäßen Katalysators ist die Tatsache, daß es mit Hexachloroplatinsäure arbeitet. Der Einsatz chlorarmer und wesentlich teuerer Vorläuferverbindungen, wie zum Beispiel Platinnitrat, ist nicht erforderlich. Die Edelmetallformkosten der Hexachloroplatinsäure liegt um ein Vielfaches niedriger als bei aufwendig hergestellten, chlorreduzierten Edelmetallverbindungen, wie zum Beispiel von Platinnitrat oder von hydroxidischen Platin(IV)-verbindungen.

### Vergleichsbeispiel 3

In Analogie zum in Beispiel 2 beschriebenen erfindungsgemäßen Katalysators wurden 43,63 g Vulcite® (Feuchte 0,97 Gew.-%) in 1500 ml deionisiertem Wasser suspendiert und 30 min mit Ultra-Turrax gerührt.

20 g einer Lösung von Hexachloroplatin(IV)säure (25 Gew.-%) und 3,95 einer Lösung von Rhodium(III)chlorid (20 Gew.-%) wurden mit deionisiertem Wasser auf ein Gesamtvolumen von 150 ml verdünnt. Anschließend wurde diese Lösung innerhalb von 15 min zur siedenden Trägersuspension getropft. Der pH-Wert der Suspension wurde wegen der Gefahr des Überschäumens innerhalb von 120 min mit 0,12 M Natriumhydrogencarbonatlösung auf pH =8,5 gebracht. Ein pH-Wert von 9 ließ sich unter diesen Bedingungen nicht erreichen. Danach wurden die ausgefällten Verbindungen mit 6,8 ml Formaldehyd (37 Gew.-%) reduziert.

Nach dem Reduktionsschritt wurden der Suspension 7,23 g Eisen (III) nitrat 9 Hydrat, gelöst in 100 ml deionisiertem Wasser, tropfenweise hinzugefügt. Mit 0,12 M Natriumhydrogencarbonatlösung wurde der pH-Wert innerhalb von 30 min erneut angehoben, 15 min nachgerührt und abfiltriert. Nach Trocknen im Vakuum wurde der Pt/Rh/Fe-Katalysator eine Stunde bei 900°C und anschließend eine Stunde bei 600°C unter Stickstoff calciniert.

Die XRD-Analyse ergabe eine Größe der Pt/Rh/Fe-Legierungskristallite von 12,2 nm, die Gitterkonstante betrug 0,3867 nm. Der Katalysator hatte die molare Zusammensetzung Pt₅₀Rh₁₅Fe₃₅ mit einem Pt-Gehalt von 10 Gew.-%.

Dieses Vergleichsbeispiel bestätigt, daß für die Herstellung des erfindungsgemäßen Katalysators die Verwendung einer starken Base als Fällungsreagenz von entscheidender Bedeutung ist. Bei Verwendung von NaHCO₃ werden nur sehr grobkörnige Legierungskristallite mit Kristallitgrößen von mehr als 10 nm erhalten, während bei Verwendung von NaOH Kristallitgrößen von weniger als 10 nm zugänglich sind.

## Patentansprüche

1. Platin-Legierungskatalysator auf einem elektrisch leitfähigen Kohlenstoffträger enthaltend eine Legierung aus 40 bis 60 Atom-% Platin, 10 bis 20 Atom-% Rhodium und 20 bis 50 Atom-% Eisen in Form von feinteiligen Legierungspartikeln,
**dadurch gekennzeichnet,**
**daß** die mittlere Kristallitgröße der Legierungspartikel zwischen 6,0 und 8,5 nm beträgt.

2. Platin-Legierungskatalysator nach Anspruch 1,
**dadurch gekennzeichnet,**
**daß** Platin in einer Menge von 5 bis 50, bevorzugt 10 bis 20 Gew.-%, bezogen auf das Gesamtgewicht des Katalysators, vorliegt.

3. Verfahren zur Herstellung eines Platin-Legierungskatalysators nach Anspruch 1 oder 2, welches die folgenden Verfahrensschritte enthält:
a) Anfertigen einer Trägersuspension durch Suspendieren des Kohlenstoffträgers in Wasser,
b) Erwärmen der Trägersuspension bis zum Sieden und Halten der Temperatur während der folgenden Schritte auf dem Siedepunkt,
c) Zugeben von wäßrigen Lösungen von Hexachloroplatinsäure und Rhodiumchlorid sowie von Eisennitrat,
d) Ausfällen von Platin, Rhodium und Eisen durch langsame Zugabe von Natronlauge,
e) Reduzieren der ausgefällten Verbindungen durch Zugabe eines wäßrigen Reduktionsmittels,
f) Abtrennen des Katalysators von der wäßrigen Phase der Trägersuspension,
g) Trocknen des Katalysators,
h) Calcinieren des Katalysators in einer inerten Atmosphäre bei 700 bis 1000°C für die Dauer von 0,5 bis 2 Stunden,
i) Absenken der Temperatur auf 700 bis 500°C und Calcinieren des Katalysators für weiter 0,5 bis 2 Stunden.

4. Verfahren nach Anspruch 3,
**dadurch gekennzeichnet,**
**daß** die Zugabe der wäßrigen Lösungen von Hexachloroplatinsäure und Rhodiumchlorid sowie von Eisennitrat in zwei Schritten erfolgt, wobei zunächst eine gemeinsame Lösung von Hexachloroplatinsäure und Rhodiumchlorid der Trägersuspension zugegeben und Platin und Rhodium durch Natronlauge ausgefällt werden, bevor Eisennitrat zur Trägersuspension gegeben und durch weitere Zugabe von Natronlauge ausgefällt wird.

5. Verfahren nach Anspruch 4,
**dadurch gekennzeichnet,**
**daß** der Reduktionsschritt e) direkt nach dem Ausfällen von Platin und Rhodium vorgenommen wird.

6. Verfahren nach Anspruch 3,
**dadurch gekennzeichnet,**
**daß** in Schritt c) Hexachloroplatinsäure, Rhodiumchlorid und Eisennitrat aus einer gemeinsamen, wäßrigen Lösung der Trägersuspension zugegeben werden.

## Claims

1. A platinum alloy catalyst on an electrically conductive carbon support containing an alloy of 40 to 60 atom-% of platinum, 10 to 20 atom-% of rhodium and 20 to 50 atom-% of iron in the form of finely divided alloy particles, **characterised in that** the average crystallite size of the alloy particles is between 6.0 and 8.5 nm.

2. The platinum alloy catalyst according to Claim 1, **characterised in that** the platinum is present in an amount of 5 to 50, preferably 10 to 20 wt.%, with respect to the total weight of the catalyst.

3. A process for preparing a platinum alloy catalyst according to Claim 1 or 2, which includes the following process steps:
a) make up a support suspension by suspending the carbon support in water,
b) heat the support suspension to boiling point and hold the temperature at boiling point during the following steps,
c) add aqueous solutions of hexachloroplatinic acid and rhodium chloride and iron nitrate,
d) precipitate platinum, rhodium and iron by the slow addition of caustic soda solution,
e) reduce the precipitated compounds by adding an aqueous reducing agent,
f) separate the catalyst from the aqueous phase of the support suspension,
g) dry the catalyst,
h) calcine the catalyst in an inert atmosphere at 700 to 1000°C for a period of 0.5 to 2 hours,
i) lower the temperature to 700 to 500°C and calcine the catalyst for a further 0.5 to 2 hours.

4. The process according to Claim 3, **characterised in that** the addition of aqueous solutions of hexachloroplatinic acid and rhodium chloride and also of iron nitrate takes place in two steps, wherein a common solution of hexachloroplatinic acid and rhodium chloride is first added to the support suspension and platinum and rhodium are precipitated with caustic soda solution, before adding iron nitrate to the support suspension and precipitating by the further addition of caustic soda solution.

5. The process according to Claim 4, **characterised in that** the reduction step (e) is performed directly after precipitating platinum and rhodium.

6. The process according to Claim 3, **characterised in that** in step (c) hexachloroplatinic acid, rhodium chloride and iron nitrate are added to the support suspension from a common, aqueous solution.

## Revendications

1. Catalyseur en alliage de platine sur un support de carbone électriquement conducteur, contenant un alliage constitué de 40 à 60 % atomique de platine, 10 à 20 % atomique de rhodium et 20 à 50 % atomique de fer sous forme de particules d'alliage finement dispersées,
**caractérisé en ce que**
la taille moyenne du cristallite des particules d'alliage est comprise entre 6,0 et 8,5 nm.

2. Catalyseur en alliage de platine selon la revendication 1,
**caractérisé en ce que**
le platine est présent dans une quantité de 5 à 50, de préférence de 10 à 20 % en poids par rapport au poids total du catalyseur.

3. Procédé de fabrication d'un catalyseur d'alliage de platine selon la revendication 1 ou 2,
comprenant les étapes suivantes :
a) Préparation d'une suspension support par la mise en suspension du support de carbone dans de l'eau,
b) Réchauffage de la suspension support jusqu'à l'ébullition et maintien de la température au point d'ébullition pendant les étapes suivantes,
c) Addition de solutions aqueuses d'acide hexachloroplatinique et de chlorure de rhodium ainsi que de nitrate de fer,
d) Précipitation du platine, du rhodium et du fer par addition lente de soude caustique,
e) Réduction des composés précipités par addition d'un agent de réduction aqueux,
f) Séparation du catalyseur de la phase aqueuse de la suspension support,
g) Séchage du catalyseur,
h) Calcination du catalyseur en atmosphère inerte à une température de 700 à 1000°C pour une durée de 0,5 à 2 heures,
i) Abaissement de la température à 700 à 500°C et calcination du catalyseur pendant encore 0,5 à 2 heures.

4. Procédé selon la revendication 3,
**caractérisé en ce que**
l'addition des solutions aqueuses d'acide hexachloroplatinique et de chlorure de rhodium ainsi que de nitrate de fer est réalisée en deux étapes, une solution commune d'acide hexachloroplatinique et de chlorure de rhodium étant tout d'abord ajoutée à la suspension support et le platine et le rhodium étant précipités avec de la soude caustique avant d'ajouter le nitrate de fer à la suspension support et de le précipiter en ajoutant encore de la soude caustique.

5. Procédé selon la revendication 4,
**caractérisé en ce que**
l'étape de réduction e) est réalisée immédiatement après la précipitation du platine et du rhodium.

6. Procédé selon la revendication 3,
**caractérisé en ce qu'**
à l'étape c), on ajoute de l'acide hexachloroplatinique, du chlorure de rhodium et du nitrate de fer à partir d'une solution aqueuse commune à la suspension support.
